# EUROPÄISCHE PATENTANMELDUNG

(11) **EP 4 190 529 A1**
(43) Veröffentlichungstag der Anmeldung: **07.06.2023**
(21) Anmeldenummer: 22020549.6
(22) Anmeldetag: 14.11.2022
(51) Int. Cl.: B29C 45/76

(54) **VERFAHREN FÜR DAS AUTOMATISCHE ERKENNEN UND PROTOKOLLIEREN VON SERIENMÄSSIGEN ARBEITSZYKLEN**

(30) Priorität: 15.11.2021 AT 1822021
(71) Anmelder: Aisemo GmbH, 4675 Weibern (AT)
(72) Erfinder: Auer, Wolfgang, 4675 Weibern (AT); Schwarz, Werner, 4060 Leonding (AT)

(57) **Zusammenfassung**

Die Erfindung betrifft ein Verfahren für das automatische Erkennen und Protokollieren von serienmäßigen Arbeitszyklen einer Anlage, welche eine Maschine (1) und ein an der Maschine (1) befestigtes und durch die Maschine bewegtes wechselbares Serienwerkzeug (3) umfasst, wobei der Verlauf einer an der Maschine (1) gemessenen physikalischen Größe, deren Wert zeitlich mit der Periodendauer der Arbeitszyklen der Anlage schwankt, durch automatische Datenverarbeitung auf Übereinstimmung mit einem Musterverlauf überprüft wird. Zur Aufnahme der Musterverläufe der physikalischen Größen an Maschine (1) und Serienwerkzeug (3) führt die Anlage Arbeitszyklen durch, und die physikalischen Größen an Maschine (1) und Serienwerkzeug (3) werden gemessen und aufgezeichnet werden. Zusätzlich wird dabei eine Information aufgenommen wird, welche einen genau definierten Referenzzeitpunkt im jeweiligen Arbeitszyklus der Anlage kennzeichnet, wobei diese zusätzliche Information durch ein Signal (7) ausgelöst wird, welches von der Anlage selbst während des Arbeitszyklus generiert wird.

## Beschreibung

Die Erfindung betrifft ein Verfahren für das automatische Erkennen und Protokollieren von serienmäßigen Arbeitszyklen einer Anlage, welche eine Maschine und ein an dieser befestigtes und durch diese bewegtes wechselbares Serienwerkzeug umfasst.

In der DE 2922371 C1 wird vorgeschlagen, den Verbrennungsmotor eines Fahrzeuges automatisch zu überwachen, indem die spektrale Leistungsdichte eines Spektrums von Schwingungen die durch den Verbrennungsmotor während dessen Lauf verursacht und durch Sensoren detektiert werden, durch eine elektronische Schaltung laufend mit der spektralen Leistungsdichte eines Musterspektrums verglichen wird, und bei einer unzulässigen Abweichung ein Signal ausgegeben wird. In den Vergleich können auch Rahmenbedingungen wie Drehzahl und Betriebstemperatur mit einfließen - beispielsweise als Modifikationen des Musterspektrums. Das Musterspektrum wird typischerweise im Anschluss an die werksseitige Endprüfung des Fahrzeuges oder des Verbrennungsmotors durch jene Sensoren, die später auch zur laufenden Überwachung dienen, aufgenommen. Die beachteten spektralen Leistungsdichten werden als über die Dauer von einigen Arbeitszyklen hinweg konstant angenommen, und nicht als solche, welche sich innerhalb eines einzelnen Arbeitszyklus des Verbrennungsmotors von Stadium zu Stadium ändern.

Die EP 1 640 136 B1 beschreibt ein Überwachungsverfahren für eine Formmaschine, gemäß während eines Arbeitszyklus mehrere Parameter an der Formmaschine gemessen werden, die Messergebnisse auf integriert werden, und der zeitliche Verlauf des so gebildeten Wertes mit einem Musterverlauf verglichen wird, welcher in früheren Arbeitszyklen aufgenommen wurde. Bei erheblichen Abweichungen zwischen aktuellem Verlauf und Musterverlauf wird ein Signal ausgegeben. Indem auf integrierte Messverläufe verglichen werden, und nicht Messverläufe direkt, kann die Auswirkung von temporären Einflüssen wie z.B. einmaligen Stößen etc., einfach weggefiltert werden.

Die DE 102018004119 A1 beschreibt ein durch Menschen tragbares, batteriebetriebenes Gerät, welches Sensoren wie beispielsweise Beschleunigungssensoren aufweist, und eine Zustandswählmöglichkeit bietet. Je nachdem welcher Zustand gewählt ist, kann entweder ein Referenzverlauf einer physikalischen Größe aufgenommen werden, oder ein aktueller Verlauf der physikalischen Größe mit einem früher aufgenommenen Referenzverlauf verglichen werden. Ergebnisse des Vergleiches können beispielsweise über ein Smartphone ausgegeben werden. Typische Anwendungen betreffen die Überwachung von gesundheitsrelevanten Verhaltensweisen von Menschen.

Beispielsweise die EP 1486312 B1 und die EP 1762360 B1 befassen sich mit der Anbringung von Zählwerken und zugehörigen Sensoren an Spritzgusswerkzeugen, um Spritzgießvorgänge oder Öffnungs- und Schließvorgänge des jeweiligen Spritzgusswerkzeuges detektieren und mitzählen zu können.

In der EP 2 576179 B1 wird vorgeschlagen, an einem Spritzgusswerkzeug und eventuell auch an der Materialzuführungsvorrichtung einer Spritzgussmaschine einen Sensor anzubringen, welcher fortlaufend mechanische Schwingungen am Anbringungsort misst, und diese Messergebnisse hinsichtlich Frequenzspektrum und zeitlichem Verlauf zu untersuchen und einer darauf aufbauenden Mustererkennung zu unterziehen, um anhand von erkannten Mustern auf Zustände von Anlagenteilen oder zu vergießendem Material schließen zu können.

Die EP 2008413 B1 befasst sich mit dem Aufbau eines drahtlosen Zusammenschlusses zwischen einer Vorrichtung und einem Gerät zwecks Durchführung einer Operation in Abhängigkeit von der Distanz zwischen Vorrichtung und Gerät. Gemäß einer Variante wird dann, wenn Vorrichtung und Gerät ausreichend nah aneinander sind, die Distanz zwischen beiden gemessen, daraus ein Beschleunigungsverlauf errechnet und angezeigt und es wird überprüft, ob die Anzeige einer vorgegebenen Regel entspricht. Im positiven Fall wird der drahtlose Zusammenschluss gebildet, worunter wohl zu verstehen ist, dass beispielsweise eine Bluetooth-Verbindung hergestellt wird.

Die TW 201826183 A und die US 8907768 B2 beschreiben eine Methode für den Aufbau eines drahtlosen Kommunikationskanals zwischen zwei mobilen Geräten wie typischerweise Smartphones unter Zwischenschaltung eines Servers zwecks Durchführung von Transaktionen wie typischerweise einer Zahlung auf digitalem Weg. Wenn ein mobiles Gerät geschüttelt wird, teilt es seine geographische Position und seine Bereitschaft zur Verbindung mit einem weiteren mobilen Gerät an den Server mit. Nur wenn Gleiches gleichzeitig von einem zweiten mobilen Gerät in einem vorgegebenen Nahbereich zum ersten mobilen Gerät geschieht und auch Kennwerte des Schüttelns übereinstimmen, werden seitens des Servers weitere Schritte für den Aufbau des für die beabsichtigte Transaktion benötigten Kommunikationskanals zwischen den beiden Geräten durchgeführt.

Die US 10034124 B2 und die WO 2010078094 A beschreiben den Aufbau eines drahtlosen Zusammenschlusses wie beispielsweise einer Bluetooth-Verbindung zwischen zwei mobilen Geräten wie typischerweise einem Smartphone und einem mobilen Lautsprecher, indem mit beiden Geräten gleichzeitig eine gleiche messbare Aktivität, wie beispielsweise gemeinsames Schütteln, welches durch Beschleunigungssensoren gemessen wird, durchgeführt wird.

Die zum Prioritätstag der vorliegenden Anmeldung noch nicht veröffentlichte Österreichische Patentanmeldung A 234/2020 beschreibt ein Verfahren für das Protokollieren von serienmäßigen Arbeitszyklen einer Anlage welche eine Maschine und ein an dieser befestigtes wechselbares Serienwerkzeug umfasst, indem Zählreihen gebildet werden, welche besagen, wie viele Zyklen in Zusammenwirkung von einem bestimmten Werkzeug mit einer bestimmten Maschine durchgeführt wurden, wobei das erforderliche Erkennen des Zusammenwirkens von jeweiligem Werkzeug mit jeweiliger Maschine auf Basis eines Vergleiches zwischen den zeitlichen Verläufen der Werte zweier gemessener physikalischer Größen erfolgt, wobei die eine physikalische Größe am Werkzeug gemessen wird und die zweite physikalische Größe an der Maschine, und wobei beide physikalische Größen solche sind, deren Wert sich zyklisch mit dem Rhythmus des durch Werkzeug und Maschine gemeinsam abgewickelten Arbeitszyklus ändert.

Die der Erfindung zu Grunde liegende Aufgabenstellung besteht darin, das automatische Erkennen und überwachen von Arbeitszyklen von Anlagen verlässlicher zu machen, wobei die Anlagen jeweils eine Maschine und ein an der Maschine befestigtes, und durch die Maschine bewegtes wechselbares Serienwerkzeug, sowie Sensoren umfassen, welche bezüglich Maschine und Serienwerkzeug zumindest eine solche physikalische Größe messen, deren Wert zeitlich mit der Periodendauer der Arbeitszyklen der Anlage schwankt.

Für das Lösen der Aufgabe wird vorgeschlagen, die an Maschine und Serienwerkzeug jeweils durch Sensoren gemessenen Verläufe der jeweiligen physikalischen Größe mit Musterverläufen zu vergleichen, welche in einem früheren Betriebszustand von Maschine und Werkzeug durch die Sensoren aufgenommen wurden, und an Hand der Vergleiche die jeweils aktuell Arbeitszyklen durchführenden Maschinen und Werkzeuge zu identifizieren und die Arbeitszyklen zu erkennen. Mit diesen Erkenntnissen können dann die Arbeitszyklen der Paarung von Maschine und Serienwerkzeug gezählt werden, und auch allfällige bedenkliche Änderungen in Verläufen von physikalischen Größen erkannt und dementsprechend Warnungen bezüglich der betroffenen Maschine oder des betroffenen Serienwerkzeuges ausgegeben. Beim Erstellen der Information zu den einzelnen Musterverläufen wird dabei nicht nur Information über den zeitlichen Verlauf der jeweiligen physikalischen Größe aufgezeichnet, sondern auch eine zusätzliche Information aufgezeichnet, die einen genau definierten Referenzzeitpunkt in einem Arbeitszyklus der Anlage kennzeichnet, wobei diese zusätzliche Information durch ein Signal ausgelöst wird, welches von der Anlage selbst während eines Arbeitszyklus generiert wird.

Anlagen im Sinne dieser Schrift können beispielsweise Spritzgussmaschinen, Druckgussmaschinen, Prägemaschinen, Gesenkschmiedepressen, Abkantmaschinen, Biegemaschinen, Stanzanlagen etc. - ergänzt um die jeweiligen Serienwerkzeuge - sein. Im Prinzip sind es alle Anlagen, welche eine Maschine und ein Serienwerkzeug umfassen und zur serienmäßigen Herstellung von Erzeugnissen aus einem Material durch urformen, umformen oder trennen durch mechanische Einwirkung dienen, wobei das Serienwerkzeug passend zur Form des zu bildenden Erzeugnisses geformt ist und die Maschine das Serienwerkzeug trägt und die notwendigen Bewegungen des Serienwerkzeuges und/oder des zu verarbeitenden Materials antreibt. Der zurzeit wertvollste und am meisten typische Anwendungsfall der vorliegenden Erfindung betrifft wohl das Spritzgießen.

Die Erfindung wird an Hand von Zeichnungen veranschaulicht.
- Fig. 1:: zeigt in einer Art Blockschaltbild die wesentlichen erfindungsgemäßen Komponenten in einer beispielhaften erfindungsgemäßen Architektur für das Aufnehmen von Musterverläufen. In strichpunktierten bzw. strichlierten Linien sind Datenübertragungswege, beispielsweise Funkstrecken, dargestellt.
- Fig. 2:: zeigt beispielhafte zeitliche Verläufe zweier beim Aufnehmen von Musterverläufen gemessenen physikalischer Größen einschließlich zugehöriger Referenzzeitpunkte.
- Fig. 3:: zeigt nach Art von Fig. 1 in einem Blockschaltbild die wesentlichen erfindungsgemäßen Komponenten für den serienmäßigen Betrieb. In strichpunktierten Linien sind Datenübertragungswege, beispielsweise Funkstrecken, dargestellt.

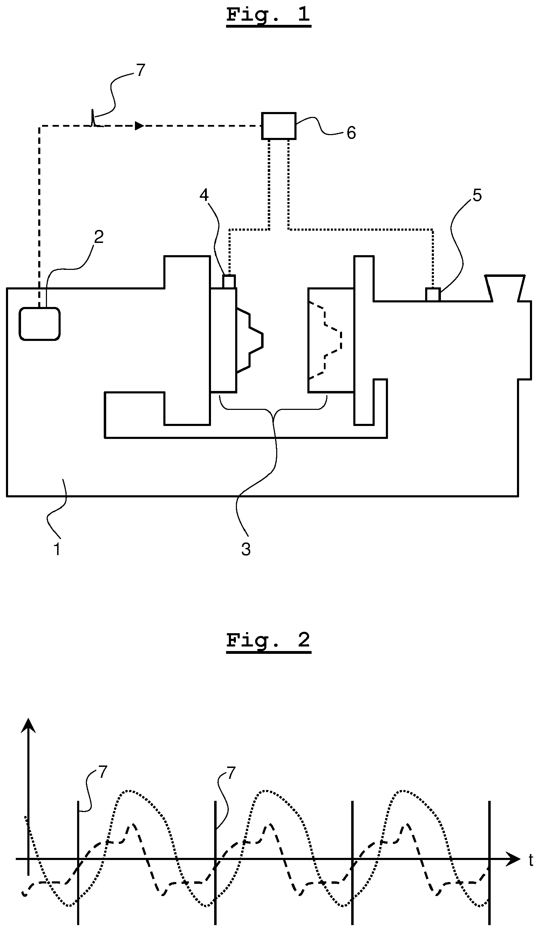

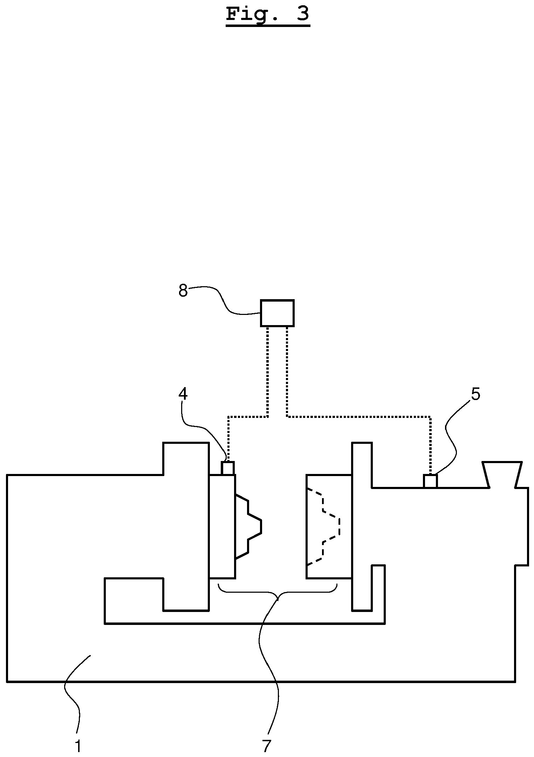

Gemäß Fig. 1 und Fig. 3 ist auf eine Maschine 1, die beispielsweise eine Spritzgussmaschine sein kann, und durch eine Maschinensteuerung 2 steuerbar ist, ein zweiteiliges Serienwerkzeug 3 - beispielsweise eine Spritzgussform - aufgespannt. An der Maschine 1 ist ein maschinenseitiger Sensor 4 angebracht und an dem Serienwerkzeug 3 ist ein werkzeugseitiger Sensor 5 angebracht. Eine Aufnahmeeinheit 6, welche der Aufnahme von Musterverläufen der von den Sensoren 4, 5 gemessenen physikalischen Größen dient, ist über Datenübertragungskanäle mit der Maschinensteuerung 2 und den Sensoren 4, 5 in Verbindung.

Gemäß Fig. 1 und Fig. 2 werden für das Aufnehmen von Musterverläufen der durch die Sensoren 4, 5 gemessenen physikalischen Größen erst die Maschinensteuerung 2, und die Sensoren 4, 5 in der Aufnahmeeinheit 6 registriert, dann die Aufnahmeeinheit 6 in den Zustand "Musterverläufe aufnehmen" geschaltet, und dann die Maschine 1 zu zyklischer Arbeit, beispielsweise der zyklischen Herstellung von Spritzgussteilen, gestartet.

Die Sensoren 4, 5 liefern dann Messwerte von jeweils einer gemessenen physikalischen Größe, deren beispielhafter Verlauf in Fig. 2 durch eine punktierte Linie und eine strichlierte Linie dargestellt ist. Die Messwerte werden in der Aufnahmeeinheit 6 den jeweiligen Sensoren 4, 5 zugeordnet und zeitlich geordnet abgespeichert, sodass sie eine datentechnische Abbildung der Fig. 2 gezeigten zeitlichen Verläufe sind.

Zyklisch mit dem Arbeitszyklus der Maschine 1 sendet auch die Maschinensteuerung 2 je Arbeitszyklus ein kurzes Signal 7 (in Fig. 2 durch jeweils einen senkrechten Strich symbolisiert dargestellt) an die Aufnahmeeinheit 6. Dieses Signal 7 wird immer zum gleichen Zykluszustand gesandt.

Am Beispiel dass die Maschine 1 eine Spritzgießmaschine ist, und dementsprechend das Serienwerkzeug 3 eine Spritzgießform kann der Zeitpunkt an welchem die Maschinensteuerung 2 ein Signal 7 an die Aufnahmeeinheit 6 sendet, immer jener Zeitpunkt sein, an welchem die Bewegung zum Schließen der Spritzgießform (Serienwerkzeug 2) startet. Das von der Maschinensteuerung 2 an die Aufnahmeeinheit 6 gesandte Signal 7 ist damit ein Referenzsignal, welches als Ende eines vorherigen und als Beginn eines neuen Arbeitszyklus der Anlage ausgelegt werden kann. Durch Messung des zeitlichen Abstandes zwischen zwei aufeinanderfolgenden dieser Signale 7 ist damit die Zyklusdauer einfach und eindeutig messbar.

Ganz besonders wertvoll ist das Signal 7 deswegen, weil es damit einfach möglich wird, die Aufnahme von Musterverläufen automatisch zu starten bzw. zu stoppen. Dazu braucht lediglich in der Aufnahmeeinheit 6 ein Algorithmus hinterlegt zu werden, dass Musterverläufe zu den von den Sensoren 4, 5 gelieferten Signalfolgen nur dann registriert werden, wenn parallel dazu mit einer Widerholungsrate in festgelegten Grenzen Signale 7 von der Maschinensteuerung 2 bei der Aufnahmeeinheit 6 ankommen.

Die aufgenommenen Musterverläufe werden einschließlich der Information, von welcher Maschine 1 bzw. von welchem Serienwerkzeug 3 die gemessenen Daten stammen, gespeichert und einer Kontrolleinheit 8 (Fig. 3), welche baulich mit der Aufnahmeeinheit vereinigt sein kann aber nicht vereinig sein muss, zugänglich gemacht.

In dem durch Fig. 3 symbolisierten Zustand ist die Aufnahme von Musterverläufen der von den Sensoren 4 und 5 gemessenen Wertefolgen abgeschlossen, und diese Musterverläufe sind in der Kontrolleinheit 8, welche eine Anlage zur automatischen Datenverarbeitung ist, als digitale Daten hinterlegt. Wenn nun die aus Maschine 1, und Serienwerkzeug 3 bestehende Anlage zu zyklischem Betrieb gestartet wird, messen der maschinenseitige Sensor 4 und der werkzeugseitige Sensor 5 an Maschine 1 bzw. Serienwerkzeug 3 laufend eine physikalische Größe und senden die Ergebnisse laufend mittelbar oder unmittelbar an die Kontrolleinheit 8. In der Kontrolleinheit 8 werden die aus den laufend ankommenden Messergebnissen gebildeten Wertefolgen mit zuvor besprochenen Musterverläufen verglichen und auf Übereinstimmungen untersucht. Eine erkannte Übereinstimmung bedeutet, dass die dem jeweiligen zutreffenden Musterverlauf zugeordnete Maschine 1, bzw. das dem jeweiligen zutreffenden Musterverlauf zugeordnete Serienwerkzeug 3 gerade im Betrieb ist, und Arbeitszyklen absolviert.

Die gewonnene Erkenntnis kann dazu benutzt werden, die Arbeitszyklen von Maschine 1 und Serienwerkzeug 3 sowohl einzeln zu zählen, als auch zu zählen, wie viele Arbeitszyklen sie in aneinander gekoppeltem Zustand vollführen.

Für das automatische Erkennen von Übereinstimmungen zwischen Musterverläufen und aktuell aufgenommen Verläufen von Sensorergebnissen gibt es aus dem Stand der Technik schon vielerlei bekanntes Wissen, sodass hier nicht mehr im Detail darauf eingegangen werden muss. Beispielsweise können die Verläufe fouriertransformiert werden, und die Leistungsdichten in den einzelnen gefundenen Frequenzbereichen voneinander subtrahiert werden. Ergebnisse deren Betrag kleiner ist als festgelegte Grenzwerte bedeuten dann Übereinstimmung. Beispielsweise können auch die Absolutwerte der Größen voneinander subtrahiert werden, und das Ergebnis auf integriert werden. Eine Wachstumsgeschwindigkeit der Integralsumme unterhalb einer festgelegten Grenze bedeutet dann Übereinstimmung.

Für den Vorgang des automatischen Erkennens von Übereinstimmungen zwischen Musterverläufen und aktuell aufgenommen Verläufen von Sensorergebnissen ist es vorteilhaft aber nicht zwangsweise erforderlich Signale der Maschinensteuerung 2 mit einzubeziehen.

Die Kontrolleinheit 8 kann gleichzeitig eine Vielzahl von Maschinen 1 und Serienwerkzeugen 3, welche mit Sensoren 4, 5 ausgestattet sind überwachen und ggf. deren Arbeitszyklen zählen. Sofern zu den einzelnen Maschinen 1 und Werkzeugen 3 Musterverl in der Kontrolleinheit 8 hinterlegt sind, bedarf es für das Starten der Überwachung keinerlei separater Handlungen durch Menschen, welche über das Starten der zyklischen Arbeitstätigkeit der Anlagen hinausgehen.

Gemäß einer Weiterentwicklung des Erfindungsgedankens werden durch die Kontrolleinheit 8 nicht nur Zusammengehörigkeiten zwischen Musterverläufen und aktuellen Verläufen von Sensorergebnissen als Ja/Nein-Ergebnisse detektiert, sondern zu erkannten Zusammengehörigkeiten auch überprüft, wie sehr es verbleibende Unterschiede gibt, und wie sich diese im Lauf der Zeit entwickeln. Das kann dazu verwendet werden, Schäden oder Wartungsbedarf an Maschinen 1 oder Serienwerkzeugen 3 unabhängig von der Anzahl der Arbeitszyklen seit der letzten Wartung automatisch zu erkennen.

Als physikalische Größen, die durch die Sensoren 4, 5 gemessen werden, können beispielsweise dienen: Beschleunigungen (dazu gehören auch Vibrationen), Winkellagen, Geschwindigkeiten, Temperaturen, elektrische Ströme oder Spannungen oder Feldstärken, räumliche Distanzen zu Referenzpunkten, elastische Verformungen, magnetische Feldgrößen, Kräfte, Dichte von Substanzanteilen in Gasen oder Flüssigkeiten, etc. Als Signal 7, welches von der Maschinensteuerung 2 an die Aufnahmeeinheit 6 gesandt wird, können Signale dienen, die ohnedies für das Steuern der Maschine 1 ohnedies generiert werden.

## Patentansprüche

1. Verfahren für das automatische Erkennen und Protokollieren von serienmäßigen Arbeitszyklen einer Anlage, welche eine Maschine (1) und ein an der Maschine (1) befestigtes und durch die Maschine bewegtes wechselbares Serienwerkzeug (3) umfasst, wobei der Verlauf einer an der Maschine (1) gemessenen physikalischen Größe, deren Wert zeitlich mit der Periodendauer der Arbeitszyklen der Anlage schwankt, durch automatische Datenverarbeitung auf Übereinstimmung mit einem Musterverlauf überprüft wird,
**dadurch gekennzeichnet, dass**
auch der Verlauf einer an dem Serienwerkzeug (3) gemessenen physikalischen Größe, deren Wert zeitlich mit der Periodendauer der Arbeitszyklen der Anlage schwankt durch automatische Datenverarbeitung auf Übereinstimmung mit einem Musterverlauf überprüft wird, und
dass zur Aufnahme der Musterverläufe der physikalischen Größen an Maschine (1) und Serienwerkzeug (3) die Anlage Arbeitszyklen durchführt, und die physikalischen Größen an Maschine (1) und Serienwerkzeug (3) gemessen und aufgezeichnet werden, wobei zu den Musterverläufen eine zusätzliche Information aufgenommen wird, welche einen genau definierten Referenzzeitpunkt im jeweiligen Arbeitszyklus der Anlage kennzeichnet, wobei diese zusätzliche Information durch ein Signal (7) ausgelöst wird, welches von der Anlage selbst während des Arbeitszyklus generiert wird.

2. Verfahren nach Anspruch 1, **dadurch gekennzeichnet, dass** das Signal (7) ursächlich durch eine Maschinensteuerung (2) der Maschine (1) ausgelöst wird.

3. Verfahren nach Anspruch 1 oder 2, **dadurch gekennzeichnet, dass** die Erfassung von Musterverläufen automatisch an die Bedingung gekoppelt ist, dass das Signal (7) innerhalb einer nach oben hin begrenzten Dauer wiederholt wird.

4. Verfahren nach einem der Ansprüche 1 bis 3, **dadurch gekennzeichnet, dass** anhand erkannter Übereinstimmungen von aktuellen Verläufen von physikalischen Größen und Musterverläufen die beteiligte Maschine (1) und das beteiligte Serienwerkzeug (3) identifiziert werden, sowie erkannt wird, dass die Maschine (1) und das Serienwerkzeug (3) gemeinsam Arbeitszyklen durchführen, und dass diese Arbeitszyklen gezählt werden.

5. Verfahren nach einem der Ansprüche 1 bis 4, **dadurch gekennzeichnet, dass** anhand erkannter Übereinstimmungen von aktuellen Verläufen von physikalischen Größen und Musterverläufen die Maschine (1) und/oder das Serienwerkzeug (3) identifiziert werden, und dass Unterschiede zwischen als zusammengehörig erkannten Paarungen von Musterverläufen und aktuellen Verläufen von physikalischen Größen gemessen werden.

6. Verfahren nach einem der Ansprüche 1 bis 5, **dadurch gekennzeichnet, dass** die gemessenen physikalischen Größen Beschleunigungen sind.

7. Verfahren nach einem der Ansprüche 1 bis 6, **dadurch gekennzeichnet, dass** die Maschine (1) eine Spritzgießmaschine ist, und dass das Serienwerkzeug (3) eine Spritzgießform ist.
